# EUROPEAN PATENT APPLICATION

(11) **EP 4 265 681 A1**
(43) Date of publication of application: **25.10.2023**
(21) Application number: 22771186.8
(22) Date of filing: 08.03.2022
(51) Int. Cl.: C08L 25/06, C08K 3/013, C08K 3/26

(54) **INORGANIC POWDER-FILLED RESIN COMPOSITION AND MOLDED PRODUCT**

(30) Priority: 17.03.2021 JP 2021043766
(71) Applicant: TBM Co., Ltd., Tokyo 100-0006 (JP)
(72) Inventor: SATO Erina, Tokyo 100-0006 (JP)
(74) Representative: Papula Oy
(86) International application number: PCT/JP2022/009970
(87) International publication number: WO 2022/196434

(57) **Abstract**

Provided is a resin composition that provides a molded product having excellent moldability and mechanical properties and having excellent toughness despite being highly filled with inorganic substance powder, and a molded product made of such a resin composition that is difficult to generate defects such as a break and a chip. An inorganic substance powder-filled resin composition includes a thermoplastic resin and inorganic substance powder in a proportion of 50:50 to 10:90 in a mass ratio, in which the thermoplastic resin contains a first high impact polystyrene resin having a melt mass flow rate (200°C, 49.03 N) measured in accordance with JIS K6923-1 of 12 g/10 min to 18 g/10 min and a Charpy impact strength measured in accordance with JIS K7111 of 8 KJ/m² to 12 KJ/m² in an amount of 90% by mass or more relative to 100% by mass of a total mass of the thermoplastic resin. A second high impact polystyrene resin, a styrene resin, and/or a styrene-butadiene block copolymer is optionally further included.

## Description

### Field

The present invention relates to an inorganic substance powder-filled resin composition and a molded product. In detail, the present invention relates to a resin composition that provides a molded product providing excellent mechanical properties and having excellent toughness despite inorganic substance powder that is highly filled in a thermoplastic resin, and a molded product formed of such a resin composition.

### Background

Conventionally, thermoplastic resins have been widely used as materials for various molded products for industrial and household use, food packaging, and molded packaging for general products, along with paper materials that are derived from forest resources. Currently, however, environmental protection has become an international issue, and thus reducing the consumption amount of thermoplastic resins and paper materials has been extensively studied, in parallel with making the thermoplastic resins and paper materials non-toxic, recyclable, and incinerable. From such viewpoints, inorganic substance powder-blended thermoplastic resin compositions prepared by filling inorganic substance powders such as calcium carbonate in thermoplastic resins have been developed and put into practical use (refer to, for example, Patent Literatures 1 and 2).

The resin compositions filled with the inorganic substance powders, in particular, polystyrene resin-based compositions, however, tend to have insufficient moldability and toughness and thus may cause damages such as a fracture or a break and meshing defects during assembly or use of the molded products. Therefore, the amount of the inorganic substance filled into the resin is frequently set at a low level, for example, as described in

### Patent Literature 2.

With respect to resin compositions highly filled with inorganic substance powders, for example, Patent Literature 3 has disclosed a co-extruded sheet in which outer layers of polystyrene or the like are laminated on both sides of a resin composition sheet highly filled with talc and calcium carbonate in a polystyrene resin or the like. Patent document 4 has disclosed a technology for improving the mechanical strength of highly filled resin compositions by adding polymers such as acid modified polyolefin and ethylene vinyl acetate copolymer.

### Citation List

### Patent Literature

Patent Literature 1: Japanese Patent Application Laid-open No. 2013-10931
Patent Literature 2: Japanese Patent Application Laid-open No. 2015-160900
Patent Literature 3: Japanese Patent Application Laid-open No. H7-52227
Patent Literature 4: Japanese Patent Application Laid-open No. 2010-106270

### Summary

### Technical Problem

The technology described in Patent Literature 3, however, is limited to specific products such as sheets and the like and cannot prepare injection-molded products of various shapes and other molded products. The technology also less likely to lead to reduction in the used amount of thermoplastic resins. The technology described in Patent Literature 4 may fail to improve toughness depending on the included polymers.

The present invention has been made in view of the above circumstances. An object of the present invention is to provide a resin composition that provides molded products providing excellent moldability and mechanical properties and having excellent toughness despite inorganic substance powder that is highly filled in a styrene-based thermoplastic resin, and a molded product made of such a resin composition and reducing the occurrence of defects such as a break and a chip.

### Solution to Problem

The inventors of the present invention have intensively studied for solving the problems described above and, as a result, have found that a molded product providing excellent moldability and mechanical properties and having excellent toughness can be obtained from a highly filled resin composition when a resin composition including a specific amount of a specific high impact polystyrene resin as a resin component is used. Consequently, the inventors of the present invention have attained the present invention.

Namely, the present invention includes an inorganic substance powder-filled resin composition including:
a thermoplastic resin and inorganic substance powder in a proportion of 50:50 to 10:90 in a mass ratio, in which the thermoplastic resin contains a first high impact polystyrene resin having a melt mass flow rate (200°C, 49.03 N) measured in accordance with JIS K6923-1 (ISO1133) of 12 g/10 min or more and 18 g/10 min or less and a Charpy impact strength measured in accordance with JIS K7111 of 8 KJ/m² or more and 12 KJ/m² or less in an amount of 90% by mass or more relative to 100% by mass of a total mass of the thermoplastic resin.

In one aspect of the inorganic substance powder-filled resin composition according to the present invention, the inorganic substance powder-filled resin composition in which the first high impact polystyrene resin is contained in an amount of 93% by mass or more relative to 100% by mass of the total mass of the thermoplastic resin is described.

In one aspect of the inorganic substance powder-filled resin composition according to the present invention, the inorganic substance powder-filled resin composition in which the thermoplastic resin further includes a second high impact polystyrene resin having a melt mass flow rate (200°C, 49.03 N) measured in accordance with JIS K6923-1 (ISO1133) of 5 g/10 min or more and 9 g/10 min or less and a Charpy impact strength measured in accordance with JIS K7111 of 11 KJ/m² or more and 15 KJ/m² or less, and
a content of the first high impact polystyrene resin is 93% by mass or more and 97% by mass or less and a content of the second high impact polystyrene resin is 3% by mass or more and 7% by mass or less relative to 100% by mass of a total mass of the thermoplastic resin is described.

In one aspect of the inorganic substance powder-filled resin composition according to the present invention, the inorganic substance powder-filled resin composition in which the thermoplastic resin further includes a polystyrene resin having a melt mass flow rate (200°C, 49.03 N) measured in accordance with JIS K6923-1 (ISO1133) of 6 g/10 min or more and 10 g/10 min or less and a Charpy impact strength measured in accordance with JIS K7111 of 1 KJ/m² or more and 4 KJ/m² or less, and
a content of the first high impact polystyrene resin is 93% by mass or more and 97% by mass or less and a content of the polystyrene resin is 3% by mass or more and 7% by mass or less relative to 100% by mass of a total mass of the thermoplastic resin is described.

In one aspect of the inorganic substance powder-filled resin composition according to the present invention, the inorganic substance powder-filled resin composition in which the inorganic substance powder is heavy calcium carbonate is described.

In one aspect of the inorganic substance powder-filled resin composition according to the present invention, the inorganic substance powder-filled resin composition in which the heavy calcium carbonate is heavy calcium carbonate particles having an average particle diameter measured by an air permeation method in accordance with JIS M-8511 of 0.7 µm or more and 6.0 µm or less is described.

In one aspect of the inorganic substance powder-filled resin composition according to the present invention, the inorganic substance powder-filled resin composition further including a styrene-butadiene block copolymer having a melt mass flow rate (200°C, 49.03 N) measured in accordance with JIS K6923-1 (ISO1133) of 15 g/10 min or more and 25 g/10 min or less, and in which a content of the styrene-butadiene block copolymer is 10% by mass or more and 15% by mass or less relative to 100% by mass of a total mass of the thermoplastic resin.

The present invention solving the above problems also includes a molded product made of the inorganic substance powder-filled resin composition.

In one aspect of the molded product according to the present invention, the molded product is an injection-molded product.

### Advantageous Effects of Invention

According to the present invention, a resin composition that provides molded products providing excellent moldability and mechanical properties and having excellent toughness despite the inorganic substance powder that is highly filled in a thermoplastic resin, and a molded product made of such a resin composition and reducing the occurrence of defects such as a break, a chip, and meshing defects are provided.

### Description of Embodiments

Hereinafter, the present invention will be described in detail with reference to embodiments.

### <<Inorganic substance powder-filled resin composition>>

The inorganic substance powder-filled resin composition according to the present invention is an inorganic substance powder-filled resin composition including:
a thermoplastic resin and inorganic substance powder in a proportion of 50:50 to 10:90 in a mass ratio, in which the thermoplastic resin contains a first high impact polystyrene resin having a melt mass flow rate (200°C, 49.03 N) measured in accordance with JIS K6923-1 (ISO1133) (hereinafter, may be referred to as "MFR") of 12 g/10 min or more and 18 g/10 min or less and a Charpy impact strength measured in accordance with JIS K7111 (hereinafter, may be referred to as "Charpy impact strength") of 8 KJ/m² or more and 12 KJ/m² or less in an amount of 90% by mass or more relative to 100% by mass of a total mass of the thermoplastic resin. Hereinafter, each component constituting the inorganic substance powder-filled resin composition according to the present invention (hereinafter, may be referred to as a "resin composition") will be described in detail.

### <High impact polystyrene resin>

The high impact polystyrene resin (hereinafter, may be referred to as "HIPS") is generally a kind of polymer alloy in which a rubber component, for example, polybutadiene is mixed or grafted into polystyrene. Compared to general-purpose polystyrene, the high impact polystyrene resin has the advantages that impact resistance is excellent and a break is difficult to occur. For example, various types of HIPS such as PSJ-POLYSTYRENE (registered trademark) manufactured by PS Japan Corporation, DICSTYRENE (registered trademark) manufactured by DIC Corporation, Toyo Styrol (registered trademark) manufactured by TOYO STYRENE Co., LTD., and the like having a MFR of about 1 g/10 min to about 16 g/10 min and a Charpy impact strength of about 7 KJ/m² to about 22 KJ/m² are commercially available.

### <First high impact polystyrene resin>

Of the HIPS, the inorganic substance powder-filled resin composition according to the present invention includes HIPS having a MFR (200°C, 49.03 N) measured in accordance with JIS K6923-1 (ISO1133) of 12 g/10 min or more and 18 g/10 min or less and a Charpy impact strength measured in accordance with JIS K7111 of 8 KJ/m² or more and 12 KJ/m² or less as a main component of the resin components. The first high impact polystyrene resin belongs to a category of HIPS having high melt flowability among common HIPS and has a rather lower-than-average value for Charpy impact strength. The inventors of the present invention have found that, in the inorganic substance powder-filled resin composition, the blend of not HIPS having high Charpy impact strength but HIPS having high melt flowability as the main resin component leads to improvement in mechanical properties such as toughness and the like. The first high impact polystyrene resin serving as the main thermoplastic resin component having the MFR within the above range allows the resin composition having excellent toughness to be prepared even when the inorganic substance powder is highly filled. In order to further improve the mechanical properties of the resin composition, the MFR of the first high impact polystyrene resin is preferably 13 or more and 17 or less and particularly preferably 14 or more and 16 or less. For the same reason, the Charpy impact strength of the first high impact polystyrene resin is preferably 9 or more and 11 or less and particularly preferably 9.5 or more and 10.5 or less.

In the present invention, the first high impact polystyrene resin can be used as long as the high impact polystyrene has the MFR and Charpy impact strength as described above, and the molecular weight, the degree of branching, and the kind, amount, or the like of the rubber component as described above are not particularly limited. Most HIPS is produced by graft copolymerization of styrene and butadiene. However, polybutadiene, a random copolymer of styrene and butadiene (SBR), and other components may also be produced in the production process. In the present invention, even when these components that are unavoidably included of any kind with any content are used, the high impact polystyrene resin can be used as the first high impact polystyrene resin.

In the resin composition according to the present invention, the first high impact polystyrene resin is contained in an amount of 90% by mass or more relative to 100% by mass of the total mass of the thermoplastic resin. The resin composition having a content of the first high impact polystyrene resin of 90% by mass or more allows mechanical properties such as toughness and impact strength to be sufficient even when the thermoplastic resin is filled with a large amount of the inorganic substance powder. In order to further improve the mechanical properties, the content is preferably 93% by mass or more and particularly preferably 95% by mass or more. In the present invention, the amount of polybutadiene and other components described above, which are unavoidably included in HIPS as the resin raw material, is also accounted for as the content of the high impact polystyrene resin. The first high impact polystyrene resin is not limited to the graft copolymer. Any HIPS can be used as long as the MFR and Charpy impact strength are within the above ranges. Plural kinds of HIPS may be used in combination.

### <Second high impact polystyrene resin>

The inorganic substance powder-filled resin composition according to the present invention may also further include the second high impact polystyrene resin having lower melt flowability and higher Charpy impact strength as the thermoplastic resin together with the first high impact polystyrene resin described above. Specifically, the second high impact polystyrene resin having a melt mass flow rate (200°C, 49.03 N) measured in accordance with JIS K6923-1 (ISO1133) of 5 g/10 min or more and 9 g/10 min or less and a Charpy impact strength measured in accordance with JIS K7111 of 11 KJ/m² or more and 15 KJ/m² or less may be included together with the first high impact polystyrene resin in an amount of several percent relative to the entire thermoplastic resin.

The second high impact polystyrene resin is a resin having lower-than-average melt flowability and higher-than-average Charpy impact strength among common HIPS. Including such second high impact polystyrene resin having different melt flowability and Charpy impact strength together with the first high impact polystyrene resin allows the inorganic substance powder-filled resin composition according to the present invention to have better mechanical properties and superior toughness. Similar to the first high impact polystyrene resin, the molecular weight, the degree of branching, and the kind and amount of a rubber component of the second high impact polystyrene resin are not particularly limited as long as the second high impact polystyrene resin having the MFR and Charpy impact strength as described above is used.

In the case where the resin composition according to the present invention includes the second high impact polystyrene resin, the content of the second high impact polystyrene resin is set to 3% by mass or more and 7% by mass or less relative to 100% by mass of the total mass of the thermoplastic resin, and the second high impact polystyrene resin is combined with the first high impact polystyrene resin in an amount of 93% by mass or more and 97% by mass or less. The second high impact polystyrene resin belongs to a category of HIPS having high impact resistance. As compared with a resin composition highly filled with the inorganic substance powder, however, mechanical properties are not always sufficient when the content exceeds 7% by mass. On the other hand, the second high impact polystyrene resin having a content of less than 3% by mass may cause difficulty in exhibiting the toughness improvement effect by the combination of the two kinds of HIPS. As the content of both high impact polystyrene resins, the amount of the first high impact polystyrene resin is more preferably 94% by mass or more and 96% by mass or less and the amount of the second high impact polystyrene resin is more preferably 4% by mass or more and 6% by mass or less, relative to 100% by mass of the total mass of the thermoplastic resin.

### <Polystyrene resin>

The inorganic substance powder-filled resin composition may also include a specific general-purpose polystyrene resin as the thermoplastic resin together with the first high impact polystyrene resin described above. Specifically, a polystyrene resin having a melt mass flow rate (200°C, 49.03 N) measured in accordance with JIS K6923-1 (ISO1133) of 6 g/10 min or more and 10 g/10 min or less and a Charpy impact strength measured in accordance with JIS K7111 of 1 KJ/m² or more and 4 KJ/m² or less may be included together with the first high impact polystyrene resin in an amount of several percent relative to the entire thermoplastic resin.

Polystyrene resins are polymers mainly made of styrene and are produced and used in large quantities. Therefore, with respect to MFR alone, various types of products ranging from about 1 g/10 min to about 30 g/10 min are commercially available. Of these polystyrene resins, a typical polystyrene resin having a low MFR of about 6 g/10 min to about 10 g/10 min and a Charpy impact strength of 1 KJ/m² to 4 KJ/m² is used in the present invention. Polystyrene resins are generally resins having low toughness. In resin compositions highly filled with the inorganic substance powder, toughness may be rather improved by including the polystyrene resin together with the first high impact polystyrene resin described above.

In the case where the resin composition according to the present invention includes the polystyrene resin, the content of the polystyrene resin is set to 3% by mass or more and 7% by mass or less and the polystyrene resin is combined with the first high impact polystyrene resin in an amount of 93% by mass or more and 97% by mass or less relative to 100% by mass of the total mass of the thermoplastic resin. The toughness of the resin composition can be further improved as long as the polystyrene resin content is within this range. As the content of both, the amount of the first high impact polystyrene resin is more preferably 94% by mass or more and 96% by mass or less and the amount of the polystyrene resin is more preferably 4% by mass or more and 6% by mass or less relative to 100% by mass of the total mass of the thermoplastic resin. In addition, 93% by mass to 95% by mass of the first high impact polystyrene resin, about 3% by mass to about 4% by mass of the second high impact polystyrene resin described above, and about 3% by mass to about 4% by mass of the polystyrene resin may be included in combination.

In the inorganic substance powder-filled resin composition according to the present invention, the thermoplastic resin includes the high impact polystyrene resins as described above and the polystyrene resin as an optional component if necessary. The thermoplastic resin may further include resin components other than these components. Examples include thermoplastic resins such as poly(meth)acrylic acid (ester), polyvinyl acetate, polyacrylonitrile, polycarbonate, polyamide, polyvinyl alcohol, petroleum hydrocarbon resins, and a coumarone indene resin. Blending these resin components may result in more uniform dispersion of each component in the inorganic substance powder-filled resin composition and improvement in physical properties and processability.

In the inorganic substance powder-filled resin composition according to the present invention, however, preferably 93% by mass or more, more preferably 96% by mass or more, and particularly preferably substantially all the amount of the thermoplastic resin components is made of the styrene-based resins such as the high impact polystyrene resins described above from the viewpoint of compatibility of various resin components. The inorganic substance powder-filled resin composition in which non-styrene-based thermoplastic resin components are substantially not included may hardly cause separation of a part of the resin compositions and can prevent deterioration in mechanical properties and moldability.

### <Inorganic substance powder>

The inorganic substance powder-filled resin composition according to the present invention includes inorganic substance powder together with the thermoplastic resin described above. The inorganic substance powder is not particularly limited. Examples thereof include powdery carbonates sulfates, silicates, phosphates, borates, oxides, or hydrates thereof of calcium, magnesium, aluminum, titanium, iron, zinc, and the like. Specifically, calcium carbonate, magnesium carbonate, zinc oxide, titanium oxide, silica, alumina, clay such as talc and kaolin, aluminum hydroxide, magnesium hydroxide, aluminum silicate, magnesium silicate, calcium silicate, aluminum sulfate, magnesium sulfate, calcium sulfate, magnesium phosphate, barium sulfate, silica sand, carbon black, zeolite, molybdenum, diatomaceous earth, sericite, shirasu, calcium sulfite, sodium sulfate, potassium titanate, bentonite, wollastonite, dolomite, and graphite are exemplified. These inorganic substance powders may be synthetic products or products originated from natural minerals and may be used singly or in combination of two or more of the inorganic substance powders.

In addition, the shape of the inorganic substance powder is not particularly limited and may be in the form of any of particles, flakes, granules, fibers, and the like. The particle shape may be a spherical shape as is generally obtained by synthetic methods, or an irregular shape as is obtained by grinding collected natural minerals.

As these inorganic substance powders, for example, calcium carbonate, magnesium carbonate, zinc oxide, titanium oxide, silica, alumina, clay such as talc and kaolin, aluminum hydroxide, and magnesium hydroxide are preferable. The inorganic substance powder including calcium carbonate is particularly preferable. As calcium carbonate, both of what is called light calcium carbonate prepared by a synthesis method and what is called heavy calcium carbonate obtained by mechanically grinding and classifying natural raw materials including CaCO₃ as the main component such as limestone may be used and the combination thereof may also be used.

In the present invention, however, the inorganic substance powder including heavy calcium carbonate is preferable. Here, heavy calcium carbonate is a product obtained by mechanically grinding and processing natural limestone or the like and is clearly distinguished from synthetic calcium carbonate produced by chemical precipitate reaction and the like. The grinding method includes a dry method and a wet method. Heavy calcium carbonate obtained by the dry method is preferable.

The heavy calcium carbonate particles are different from light calcium carbonate produced by, for example, the synthesis method and have characteristics in an irregular shape properties of the surface and a large specific surface area due to particle formation performed by the grinding treatment. The heavy calcium carbonate particles have the irregular shape and the large specific surface area as described above and thus have more contact interfaces with the thermoplastic resin in the case where the heavy calcium carbonate particles are blended in the thermoplastic resin, which is effective for uniform dispersion.

Although not particularly limited, the specific surface area of the heavy calcium carbonate particles is desirably about 3,000 cm²/g or more and about 35,000 cm²/g or less, depending on the average particle diameter of the heavy calcium carbonate particles. The specific surface area referred herein is in accordance with the air permeation method. The heavy calcium carbonate particles having the specific surface area within this range tend to reduce deterioration in processability of the obtained molded products.

The irregular shape properties of the heavy calcium carbonate particles can be represented by the low degree of spheroidization of the particle shape. Although not particularly limited, specifically, a roundness is desirably 0.50 or more and 0.95 or less, more preferably 0.55 or more and 0.93 or less, and further preferably 0.60 or more and 0.90 or less. The heavy calcium carbonate particles having the roundness within this range allow the strength and molding processability of molded products to be appropriate. Here, the roundness can be represented by (Projected area of particle)/(Area of a circle having the same perimeter as the projected perimeter of particle). The method of measuring the roundness is not particularly limited. For example, the projected area of a particle and the projected perimeter of a particle can be measured from a micrograph, or commonly commercially available image analysis software can be used.

In order to improve the dispersibility or reactivity of the inorganic substance powder, the surface may be previously modified in accordance with a common method. Examples of the surface modification method include physical methods such as plasma treatment and a method in which the surface is subjected to chemical surface treatment with a coupling agent or a surfactant. Examples of the coupling agent include a silane coupling agent and a titanium coupling agent. The surfactant may be any of anionic, cationic, nonionic, and amphoteric surfactants and examples thereof include higher fatty acids, higher fatty acid esters, higher fatty acid amides, and higher fatty acid salts. Contrary to these modified inorganic substance powders, inorganic substance powders without being subjected to surface treatment may be included.

The inorganic substance powder such as the heavy calcium carbonate particles is not particularly limited. The average particle diameter thereof is preferably 0.5 um or more and 9.0 µm or less, more preferably 0.7 um or more and 6.0 µm or less, further preferably 1.0 µm or more and 4.0 µm or less, and particularly preferably 1.2 µm or more and 3.0 µm or less. The average particle diameter of the inorganic substance powder described in the present description refers to a value calculated from the measurement result of the specific surface area by the air permeation method in accordance with JIS M-8511. As a measuring instrument, for example, a specific surface area measuring apparatus Type SS-100 manufactured by Shimadzu Corporation can be preferably used. Although depending on the layer thickness of the molded product, when a sheet-shaped molded product is molded, for example, the inorganic substance powder having an average particle diameter of more than 9.0 um may cause the inorganic substance powder to be protruded from the surface of the molded product and thus the powder to fall off, or the surface properties, mechanical strength, or the like to be impaired. In particular, in the particle diameter distribution, particles having a particle diameter of 45 µm or more are preferably excluded. On the other hand, excessively fine particles cause the viscosity at the time of kneading with the resin described above to significantly increase and thus production of the molded products may be difficult. Such problems can be prevented by setting the average particle diameter of the inorganic substance powder to 0.5 um or more and particularly 0.7 um or more and 6.0 µm or less.

As mentioned above, calcium carbonate is preferably used as the inorganic substance powder in the present invention. More preferably, the calcium carbonate includes a first calcium carbonate having an average particle diameter of 0.5 um or more and less than 2.0 um and particularly 0.7 µm or more and less than 2.0 µm as measured by the air permeation method in accordance with JIS M-8511 and a second calcium carbonate having an average particle diameter of 2.0 µm or more and less than 9.0 µm and particularly 2.0 µm or more and less than 6.0 µm as measured by the air permeation method in accordance with JIS M-8511. This allows the surface properties, printability, blocking properties, and other physical properties of the molded product to be improved. In addition, this allows the segregation of the calcium carbonate to be reduced, molded products having excellent appearance and mechanical properties such as elongation at break to be obtained, and calcium carbonate dropout from the resin composition molded product also to be reduced. Although not particularly limited, in the case where the average particle diameter of the first calcium carbonate is defined as a and the average particle diameter of the second calcium carbonate is defined as b, the first calcium carbonate and the second calcium carbonate are desirably roughly classified so that the a/b ratio is preferably about 0.85 or less, more preferably about 0.10 to about 0.70, and further preferably about 0.10 to about 0.50. This is because particularly excellent effects can be expected when such calcium carbonates having obvious difference in the average particle diameter to some extent are used together. Each of the first calcium carbonate and the second calcium carbonate desirably has a coefficient of variation (Cv) of the particle diameter (pm) distribution of about 0.01 to about 0.10 and particularly desirably about 0.03 to about 0.08. It is conceivable that the variation in the particle diameter as defined by the coefficient of variation (Cv) in this range allows each group of powders to more complementarily provide effects. The mass ratio of the first calcium carbonate to the second calcium carbonate is preferably set to about 90:10 to about 98:2 and particularly preferably about 92:8 to about 95:5. Three or more calcium carbonate groups having different average particle diameter distributions may also be used. Both of the first calcium carbonate and the second calcium carbonate are preferably surface-treated heavy calcium carbonates.

In the inorganic substance powder-filled resin composition according to the present invention, the thermoplastic resin and inorganic substance powder described above are included in a mass ratio of 50:50 to 10:90. This is because a less content of the inorganic substance powder results in difficulty in obtaining physical properties such as texture and strength of the resin composition and excessive content of the inorganic substance powder results in difficulty in kneading and molding processing and insufficient toughness. The proportion of the inorganic substance powder to the total mass of the thermoplastic resin and the inorganic substance powder is preferably 52% by mass or more and more preferably 55% by mass or more. The upper limit of the proportion is preferably 80% by mass or less, more preferably 75% by mass or less, and particularly preferably 70% by mass or less.

### <Styrene-butadiene block copolymer>

As described above, the inorganic substance powder-filled resin composition according to the present invention preferably contains the first high impact polystyrene resin in an amount of 90% by mass or more relative to 100% by mass of the total mass of the thermoplastic resin and is substantially does not include non-styrene-based thermoplastic resin components. As the components other than the thermoplastic resin, however, a specific styrene-butadiene block copolymer may be included. The resin composition according to the present invention may provide further excellent toughness by including about 10% by mass to about 15% by mass of the styrene-butadiene block copolymer. The styrene-butadiene block copolymer

(hereinafter, may be abbreviated as "SBC") is generally flexible and is usually classified as a thermoplastic elastomer, which is a third macromolecular material filling the gap between resins and rubber. In the present invention, SBC is treated as a component different from the thermoplastic resin and the content in the resin composition is not accounted for as the thermoplastic resin.

The styrene-butadiene block copolymer (SBC) is a copolymer containing polystyrene as a hard block and the polymer of butadiene as a soft block and various products are commercially available. For example, the commercially available SBC has wide variety of melt mass flow rates (200°C, 49.03 N) in the range of about 2 g/10 min to about 60 g/10 min and styrene/butadiene ratios (molar ratios) in the range of about 10/90 to about 70/30. In the present invention, a styrene-butadiene block copolymer having a melt mass flow rate (200°C, 49.03 N) measured in accordance with JIS K6923-1 (ISO1133) of 15 g/10 min or more and 25 g/10 min or less is preferably included. The SBC having the MFR in this range allows the mechanical strength, particularly toughness, of the resin composition according to the present invention to be improved and the molded product to be not easily breakable. The MFR of the SBC is more preferably in the range of 17 g/10 min to 23 g/10 min.

The molecular weight of the SBC and the length of each styrene block and butadiene block are not particularly limited. A part of the butadiene block may be hydrogenated and a hydrogenation rate is also not limited. In the present invention, however, SBC having a styrene/butadiene ratio (molar ratio) of about 25/75 to about 55/45 and particularly preferably about 30/70 to about 50/50 is preferably included. The SBC having the styrene/butadiene ratio within such a range allows flexibility and toughness to be provided and compatibility with the polystyrene resin to be excellent and thus to contribute to improving the mechanical strength of the resin composition according to the present invention.

In the case where the resin composition according to the present invention includes the SBC, the content may be set to 10% by mass or more and 15% by mass or less and preferably 11.5% by mass to 13.5% by mass relative to 100% by mass of the total mass of the thermoplastic resin. The thermoplastic resin containing the SBC in an amount of 10% by mass or more allows the toughness of the resin composition to be significantly improved and the moldability also to be excellent. The thermoplastic resin having the content of the SBC of 15% by mass or less allows the excellent mechanical properties of the resin composition to be retained.

### <Other additives>

Other additives may be added as auxiliary agents to the inorganic substance powder-filled resin composition according to the present invention, if necessary. As other additives, for example, colorants, lubricants, coupling agents, flowability improvers (flowability adjusters), cross-linking agents, dispersing agents, antioxidants, ultraviolet ray absorbers, flame retardants, stabilizers, antistatic agents, foaming agents, and plasticizers may be blended. These additives may be used singly or in combination of two or more of the additives. These additives may be blended in a kneading step described later or may be previously blended in the raw material components before the kneading step. In the inorganic substance powder-filled resin composition according to the present invention, the amount of other additives to be added is not particularly limited as long as the desired physical properties and processability are not impaired. For example, each of the other additives is desirably blended in a proportion of about 0% by mass to about 10% by mass, particularly desirably in a proportion of about 0.04% by mass to about 5.00% by mass and the total of the other additives is blended in a proportion of 10% by mass or less in the case where the mass of the entire inorganic substance powder-filled resin composition is determined to be 100%.

Hereinafter, among these other additives, the additives considered to be important will be described. However, the other additives are not limited thereto.

Examples of the plasticizers include triethyl citrate, acetyltriethyl citrate, dibutyl phthalate, diaryl phthalate, dimethyl phthalate, diethyl phthalate, di-2-methoxyethyl phthalate, dibutyl tartrate, o-benzoyl benzoate, diacetin, and epoxidized soybean oil. These plasticizers are usually blended at a proportion of several percents by mass relative to the thermoplastic resin. The amount, however, is not limited to the range and epoxidized soybean oil or the like may be blended at a proportion of about 20 parts by mass to about 50 parts by mass, depending on the purpose of the molded product. In the inorganic substance powder-filled resin compositions according to the present invention, however, the content thereof is preferably about 0.5 part by mass to about 10 parts by mass and particularly preferably about 1 part by mass to about 5 parts by mass relative to 100 parts by mass of the thermoplastic resin.

As the colorants, any of the known organic pigments, inorganic pigments, and dyes can be used. Specific examples include organic pigments such as azo, anthraquinone, phthalocyanine, quinacridone, isoindolinone, dioxazine, perinone, quinophthalone, and perylene pigments, and inorganic pigments such as ultramarine blue, titanium oxide, titanium yellow, iron oxide (red iron oxide), chromium oxide, zinc white, and carbon black.

Examples of the lubricants include fatty acid-based lubricants such as stearic acid, hydroxystearic acid, complex-type stearic acid, and oleic acid, aliphatic alcohol-based lubricants, aliphatic amide-based lubricants such as stearamide, oxystearamide, oleylamide, erucylamide, ricinolamide, behenamide, methylolamide, methylenebisstearamide, methylenebisstearobehenamide, bisamide acids of higher fatty acids, and complex-type amides, aliphatic ester-based lubricants such as n-butyl stearate, methyl hydroxystearate, polyvalent alcohol fatty acid esters, saturated fatty acid esters, and ester-based waxes, and fatty acid metal soap-based lubricants such as zinc stearate.

As the antioxidants, phosphorus-based antioxidants, phenol-based antioxidants, and pentaerythritol-based antioxidants can be used. More specifically, phosphorus-based antioxidants such as phosphorous acid esters and phosphoric acid esters are preferably used. Examples of the phosphorous acid esters include triesters, diesters, and monoesters of phosphorous acid such as triphenyl phosphite, tris(nonylphenyl) phosphite, and tris(2,4-di-t-butylphenyl) phosphite.

Examples of the phosphoric acid ester include trimethyl phosphate, triethyl phosphate, tributyl phosphate, trioctyl phosphate, triphenyl phosphate, tricresyl phosphate, tris(nonylphenyl) phosphate, and 2-ethylphenyl diphenyl phosphate. These phosphorus-based antioxidants may be used singly or in combination of two or more of the phosphorus-based antioxidants.

Examples of the phenol-based antioxidants include α-tocopherol, butylhydroxytoluene, sinapyl alcohol, vitamin E, n-octadecyl-3-(3,5-di-t-butyl-4-hydroxyphenyl) propionate, 2-t-butyl-6-(3'-t-butyl-5'-methyl-2'-hydroxybenzyl)-4-methylphenyl acrylate, 2,6-di-t-butyl-4-(N,N-dimethylaminomethyl)phenol, 3,5-di-t-butyl-4-hydroxybenzylphosphonate diethyl ester, and tetrakis[3-(3,5-di-t-butyl-4-hydroxyphenyl)propionyloxymethyl]methane. These phenol-based antioxidants can be used singly or in combination of two or more of the phenol-based antioxidants.

The flame retardants are not particularly limited. For example, halogen-based flame retardants, phosphorus-based flame retardants, and non-phosphorus-halogen-based flame retardants such as metal hydrates can be used. Specific examples of the halogen-based flame retardants include halogenated bisphenylalkanes, halogenated bisphenol-based compounds such as halogenated bisphenylethers, halogenated bisphenylthioethers, and halogenated bisphenylsulfones, and bisphenol-bis(alkyl ether)-based compounds such as brominated bisphenol A, brominated bisphenol S, chlorinated bisphenol A, and chlorinated bisphenol S. Examples of the phosphorus-based flame retardants include tris(diethylphosphinic acid) aluminum, bisphenol A bis(diphenyl phosphate), triaryl isopropyl phosphate compounds, cresyl di-2,6-xylenyl phosphate, and condensed aromatic phosphoric acid esters. Examples of the metal hydrates include aluminum trihydroxide, magnesium dihydroxide, and a combination thereof. These flame retardants can be used singly or in combination of two or more of the flame retardants. These compounds act as flame retardant aids and can improve the flame retardant effect more effectively. Furthermore, antimony oxides such as antimony trioxide and antimony pentoxide, zinc oxide, iron oxide, aluminum oxide, molybdenum oxide, titanium oxide, calcium oxide, and magnesium oxide can be used together as flame retardant aids.

The foaming agents are compounds that cause phase change from solid to gas or liquid to gas by mixing with or injecting with pressure into the inorganic substance powder-filled resin composition serving as the raw material in a melted state in a melting and kneading apparatus or gas itself, and are mainly used for controlling an expansion ratio (foaming density) of a foamed sheet. A foaming agent that is liquid at room temperature causes phase change into gas due to the resin temperature and the resultant gas is dissolved in the melted resin, and a foaming agent that is gas at room temperature is dissolved in the melted resin as it is without causing phase change. The foaming agent dispersed and dissolved in the melted resin expands inside the sheet because the pressure is released at the time of extruding the melted resin from the extrusion die into a sheet-like product to provide a foamed sheet by forming many fine closed cells inside the sheet. The foaming agent acts as a plasticizer that secondary lowers the melt viscosity of the raw material resin composition and lowers the temperature for achieving a plasticized state of the raw material resin composition.

Examples of the foaming agent include aliphatic hydrocarbons such as propane, butane, pentane, hexane, and heptane; alicyclic hydrocarbons such as cyclobutane, cyclopentane, and cyclohexane; halogenated hydrocarbons such as chlorodifluoromethane, difluoromethane, trifluoromethane, trichlorofluoromethane, dichloromethane, dichlorofluoromethane, dichlorodifluoromethane, chloromethane, chloroethane, dichlorotrifluoroethane, dichloropentafluoroethane, tetrafluoroethane, difluoroethane, pentafluoroethane, trifluoroethane, dichlorotetrafluoroethane, trichlorotrifluoroethane, tetrachlorodifluoroethane, and perfluorocyclobutane; inorganic gases such as carbon dioxide, nitrogen, and air; and water.

As the foaming agent, for example, a foaming agent including the active component of the foaming agent in a carrier resin may be preferably used. Examples of the carrier resin include crystalline olefin resins. Of these olefin resins, crystalline polypropylene resin is preferable. Examples of the active components include hydrogen carbonate salts. Of these active components, hydrogen carbonate salts are preferable. A foaming agent concentrate in which the crystalline polypropylene resin is included as a carrier resin and the hydrogen carbonate salt is included as a thermal decomposition-type foaming agent is preferable.

The content of the foaming agent included in the foaming agent in the molding step can be appropriately determined depending on the amount and the like of the thermoplastic resin and the inorganic substance powder, and is preferably in the range of 0.04% by mass to 5.00% by mass relative to the total mass of the inorganic substance powder-filled resin composition.

Various customary flowability adjusters can also be used. Examples include, but are not limited to, peroxides such as dialkyl peroxides including 1,4-bis[(t-butylperoxy)isopropyl]benzene. Depending on the kind of the used thermoplastic resin, these peroxides also act as cross-linking agents. Particularly, in the case where the SBC described above is included, a part of the SBC is cross-linked by the action of the peroxide, which may contributory to controlling the physical properties and processability of the resin composition. Although the added amount of the peroxide is not particularly limited, the amount is preferably in the range of about 0.04% by mass to about 2.00% by mass and particularly preferably about 0.05% by mass to about 0.50% by mass relative to the total mass of the inorganic substance powder-filled resin composition.

### <<Method for producing inorganic substance powder-filled resin composition>>

As the method for producing the inorganic substance powder-filled resin composition according to the present invention, common methods may be used and appropriately selected depending on molding methods (extrusion molding, injection molding, vacuum molding, or other moldings). For example, the high impact polystyrene resin and, if necessary, the polystyrene resin or the SBC may be kneaded and melted with inorganic substance powder before being fed into a molding machine from a hopper or these polymers and the inorganic substance powder may be kneaded and melted simultaneously with molding using an integrated molding machine. In the melting and kneading, each of the components is preferably uniformly dispersed and, at the same time, the mixture is kneaded by applying high shear stress. Various kinds of mixing apparatus such as general extruders, kneaders, and Banbury mixers may be used. For example, these components are preferably kneaded with a twin-screw kneader.

In the production method according to the present invention, the kneading order of the various thermoplastic resins, the styrene resin and the SBC as optional components, and the inorganic substance powder is not particularly limited. For example, these components can be kneaded simultaneously or once the polymers are kneaded together and then the mixture can be kneaded with the inorganic substance powder. Each polymer, for example, each of the first high impact polystyrene resin and the second high impact polystyrene resin, may be mixed with the inorganic substance powder or the like to align the melt viscosities of the two thermoplastic resins, and thereafter both of the mixtures may be kneaded. The second high impact polystyrene resin, the styrene resin, the inorganic substance powder, and further the SBC may be kneaded once, and thereafter the first high impact polystyrene resin may be kneaded. The first high impact polystyrene resin has a low melt viscosity and thus the method of kneading the first high impact polystyrene resin at the end as described in the latter method is advantageous to a more uniform dispersion of each component in the inorganic substance powder-filled resin composition.

In the method for producing the inorganic substance powder-filled resin composition according to the present invention, the inorganic substance powder-filled resin composition may be in the form of pellets or may not be in the form of pellets. In the case of the form of pellets, the shape of the pellets is not particularly limited. For example, pellets having a cylindrical shape, a spherical shape, an ellipsoidal spherical shape, or other shapes may be molded.

The size of the pellets may be appropriately determined depending on the shape. For example, in the case of the spherical pellets, the diameter may be 1 mm to 10 mm. In the case of the ellipsoidal spherical pellets, the pellets may have an elliptical shape with an aspect ratio of 0.1 to 1.0 and may have longitudinal and lateral lengths of 1 mm to 10 mm. In the case of cylindrical pellets, the diameter may be within the range of 1 mm to 10 mm and the length may be within the range of 1 mm to 10 mm. These shapes may be molded to the pellets after the kneading process described later. The shape of the pellets may be molded according to conventional methods.

### <<Molded product>>

The molded product of the present invention is a molded product made of the inorganic substance powder-filled resin composition described above.

The shape and the like of the molded product according to the present invention are not particularly limited and the molded product may have various forms. For example, various molded products such as sheets, toys, daily necessities including brushes and shoehorns, housings for remote controllers and telephones, and food containers and other container bodies may be molded. The molded product according to the present invention has excellent mechanical properties, particularly toughness and thus is suitable for housings, sheets, daily necessities, and the like to which force is applied during assembly and use.

The thickness of the molded product according to the present invention is not particularly limited and may vary from a thin thickness to a thick thickness depending on the form of the molded product. For example, the molded product having a thickness of 40 um to 40 mm and more preferably having a thickness of 50 um to 30 mm is exemplified. The thickness within this range allows a molded product that has no problem of moldability and processability, does not cause thickness deviation, is uniform, and has no defect to be molded.

In the case where the form of the molded product is a sheet, the thickness is desirably more preferably 50 um to 1,000 um and further preferably 50 um to 400 µm. The sheet having a thickness within this range can be suitably used as a substitute for paper or synthetic paper for general printing and information, and packaging applications.

### <<Method for producing molded product>>

The method of producing the molded product according to the present invention is not particularly limited as long as the product can be molded into the desired shape. The molded product can be molded and processed by any of the known methods such as extrusion molding, injection molding, vacuum molding, blow molding, and calender molding. Injection molding is particularly preferable. In the case where the inorganic substance powder-filled resin composition according to the present invention includes the foaming agent and a molded product in an aspect of a foamed product is obtained, any conventionally known methods including liquid phase foaming such as injection foaming, extrusion foaming, and blow foaming, or solid phase foaming such as bead foaming, batch foaming, press foaming, and atmospheric secondary foaming may be employed as the method for molding the foamed product as long as the foamed molded product can be molded into a desired shape. In one aspect of the thermoplastic compositions including the crystalline polypropylene as the carrier resin and the hydrogen carbonate salt as the thermal decomposition-type foaming agent, the injection foaming method and the extrusion foaming method can desirably be used.

### <Method for producing injection-molded product>

The inorganic substance powder-filled resin composition according to the present invention has excellent moldability as described above and can be molded into various shapes of products by injection molding. The present invention also includes the molded products, in particular the injection-molded product, of the inorganic substance powder-filled resin compositions described above. The inorganic substance powder-filled resin composition according to the present invention also has excellent toughness and is difficult to generate a break and a chip even when force is applied, and thus is suitable for molding processing including the step of molding a plurality of parts provided with protrusions and recesses for meshing and thereafter fitting those parts together. For example, the handle and other parts (body part) of a brush or safety razor blade, parts of a housing such as a remote controller or a telephone, parts of a toy, or the like can be separately injection-molded, and thereafter external force is applied to fit both parts together to prepare desired products.

The molding temperature for the injection molding, the extrusion molding, and the like varies to some extent depending on the molding method, the kind of the used thermoplastic resin, and the like, and cannot be generally specified. For example, a molding temperature of 180°C to 260°C and more preferably 190°C to 230°C allows the inorganic substance powder-filled resin composition according to the present invention to be molded into a predetermined shape with excellent drawdown properties and ductility and without any localized denaturation of the composition.

### <Method for producing sheet>

In an aspect in which the molded product according to the present invention is a sheet, the method for producing the sheet is not particularly limited as long as the sheet is molded by the method and the conventional known molding methods as described above can be used. In particular, considering the smoothness of the sheet surface, a method for molding the sheet by extrusion molding using an extruder is preferably employed.

The molding may be performed using a direct method in which a kneading process and a sheet-like product forming process are performed continuously, for example, using a T-die-type twin screw extrusion molding machine.

In the case of molding the sheet-like product, the product can be stretched in the uniaxial direction, the biaxial direction, or the multiaxial direction (stretching by, for example, a tubular method) at the time of or after the molding. In the case of the biaxial stretching, the stretching may be either sequential biaxial stretching or simultaneous biaxial stretching.

Stretching (for example, longitudinal and/or transverse stretching) of the sheet after molding allows micro voids in the sheet to be formed. This micro void formation in the sheet results in excellent whiteness of the sheet.

### Examples

Hereinafter, the present invention will be described more specifically with reference to Examples. These Examples are described only for the purpose of exemplifying specific aspects and embodiments in order to facilitate the understanding of the concept and scope of the present invention disclosed in the present description and described in the appended claims. The present invention is not limited to these Examples.

### [Example 1 and Comparative Examples 1 to 3]

Various inorganic substance powder-filled resin compositions were prepared using the raw materials described below. The resultant inorganic substance powder-filled resin compositions were molded into test specimens and the test specimens were subjected to physical property tests.
- HIPS-1: DICSTYRENE (registered trademark) HIPS (MFR: 15 g/10 min, Charpy impact strength: 10 KJ/m²) manufactured by DIC Corporation
- HIPS-X: DICSTYRENE (registered trademark) HIPS (MFR: 3.5 g/10 min, Charpy impact strength: 16 KJ/m²) manufactured by DIC Corporation
- GPPS: DICSTYRENE (registered trademark) GPPS (MFR: 8.0 g/10 min, Charpy impact strength: 2.6 KJ/m²) manufactured by DIC Corporation
- Calcium carbonate: Heavy calcium carbonate (with surface treatment, average particle diameter as measured by the air permeation method in accordance with JIS M-8511 being 2.20 um) manufactured by BIHOKU FUNKA KOGYO CO., LTD.

Forty eight parts by mass of HIPS-1 and 52 parts by mass of heavy calcium carbonate powder described above were fed into a HK-25D (diameter 25 mm, L/D=41) co-rotating twin-screw kneading and extruding machine manufactured by Parker Corporation. The pellets were prepared by strand-extrusion at a cylinder temperature of 190°C to 200°C, and thereafter cooling, and cutting. Subsequently, the pellets were fed into an injection molding machine to form JIS K 7161-2 dumbbell-shaped (type 1A) test specimens and JIS K7171 test specimens having a length of 80 mm, a width of 10 mm, and a thickness of 4 mm (Example 1).

Test specimens were molded or attempted to be molded in the same manner as the manner in Example 1 except that the thermoplastic resin components were changed as listed in Table 1 (Comparative Examples 1 and 2).

With respect to each of the test specimens prepared as described above, tensile properties, bending properties, and toughness were evaluated by the following test methods. The evaluation results are listed in Table 1 below together with the composition.

### (Tensile properties)

Using the dumbbell-shaped (type 1A) test specimens, strength at yield point, strength at break, and elongation at break were measured in accordance with JIS K 7161-2:2014 under conditions of 23°C and 50% RH using Autograph AG-100kNXplus (manufactured by Shimadzu Corporation). The stretching speed was 5 mm/minute.

### (Bending properties)

Using JIS K7171 test specimens, bending strength and bending modulus were measured in accordance with JIS K7171:2016 under conditions of 23°C and 50%RH at a speed of 2 mm/min using Autograph AG-100kNXplus (manufactured by Shimadzu Corporation).

### (Toughness test)

JIS K7171 test specimens were bent by hand to evaluate flexibility in accordance with the following criteria (n=10) .
- 5: Number of broken test specimens 0
- 4: Number of broken test specimens 1
- 3: Number of broken test specimens 2
- 2: Number of broken test specimens 3 to 6
- 1: Number of broken test specimens 7 to 10

### [Table 1]

**[Table 1 Composition and evaluation result of each sample]**

| Example | | Example 1 | Comparative Example 1 | Comparative Example 2 |
|---|---|---|---|---|
| Composition* | HIPS-1 | 48.0 | - | - |
| | HIPS-X | - | 48.0 | 18.0 |
| | GPPS | - | - | 30.0 |
| | Calcium carbonate | 52.0 | 52.0 | 52.0 |
| Evaluation result | Strength at yield point¹⁾ | 22.6 | 28.4 | Unable to be molded³⁾ |
| | Strength at break¹⁾ | 20.4 | 28.6 | |
| | Elongation at break²⁾ | 35 | 15 | |
| | Bending strength¹⁾ | 38.7 | 52.4 | |
| | Bending modulus¹⁾ | 2,800 | 3,400 | |
| | Toughness | 3 | 1 | |

| | | | | |
|---|---|---|---|---|
| * Unit: Part by mass 1) Unit: MPa 2) Unit: % 3) Evaluation was not performed because test specimens were unable to be molded. | | | | |

In accordance with the present invention, the resin composition of Example 1 including the first high impact polystyrene resin HIPS-1 having the specific MFR and Charpy impact strength had high strength in the tensile test and the bending test and the toughness evaluation result was also excellent. On the other hand, the resin composition of Comparative Example 1, which included the first high impact polystyrene resin HIPS-X that was out of the specific MFR and Charpy impact strength, had high strength but elongation was low and the toughness was inferior to that of the resin composition of Example 1. The sample in Comparative Example 2 was not able to perform injection molding itself.

It was found that the moldability and mechanical properties, in particular toughness, were improved by including the specific amount of the first high impact polystyrene resin.

### [Examples 2 to 6]

In addition, the following SBC-1 described below was used as a styrene-butadiene block copolymer and the composition of the thermoplastic resin component was variously varied to perform the same operation as the operation in Example 1. The compositions and the evaluation results are listed in Table 2.
- HIPS-2: DICSTYRENE (trademark) HIPS (MFR: 7.2 g/10 min, Charpy impact strength: 13 KJ/m²) manufactured by DIC Corporation
- SBC-1: TUFPRENE (trademark) (MFR: 20 g/10 min, styrene/butadiene ratio: 40/60) manufactured by Asahi Kasei Corporation

### [Table 2]

**[Table 2 Composition and evaluation result of each sample]**

| Example | | Example 1 | Example 2 | Example 3 | Example 4 | Example 5 | Example 6 |
|---|---|---|---|---|---|---|---|
| Composition* | HIPS-1 | 48.0 | 43.6 | 42.7- | 41.7 | 40.6 | 40.6 |
| | HIPS-2^{#} | - | - | - | - | 2.1 (50) | - |
| | GPPS^{#} | - | - | - | - | - | 2.1 (50) |
| | SBC-1 | - | 4.4 (10.0) | 5.3 (12.5) | 6.3 (15.0) | 5.3 (12.5) | 5.3 (12.5) |
| | Calcium carbonate | 52.0 | 52.0 | 52.0 | 52.0 | 52.0 | 52.0 |
| Evaluation result | Strength at yield point¹⁾ | 22.6 | 20.1 | 18.4 | 16.9 | 18.7 | 19.5 |
| | Strength at break¹⁾ | 20.4 | 19.1 | 16.9 | 12.8 | 15.6 | 18.6 |
| | Elongation at break²⁾ | 35 | 40 | 43 | 46 | 43 | 42 |
| | Bending strengthl¹⁾ | 38.7 | 36.8 | 36.1 | 30.6 | 35.7 | 32.5 |
| | Bending modulus¹⁾ | 2,800 | 2,600 | 2,400 | 2,100 | 2,700 | 2,650 |
| | Toughness | 3 | 4 | 4 | 4 | 5 | 5 |

| | | | | | | | |
|---|---|---|---|---|---|---|---|
| * Unit: % by mass # Value in parenthesis: Mass ratio (%) relative to thermoplastic resin (HIPS + GPPS) 1) Unit: MPa 2) Unit: % | | | | | | | |

The inorganic substance powder-filled resin compositions according to the present invention exhibited an increased value of the elongation at break and improved toughness by further including the styrene-butadiene block copolymer (SBC). In particular, the resin compositions of Examples 5 and 6, which included a second high impact polystyrene resin and a styrene resin together with the first high impact polystyrene resin and SBC, had significantly improved toughness.

From the above, it was exhibited that the resin composition according to the present invention including the first high impact polystyrene resin provides the molded product having excellent moldability and toughness and reduced occurrence of defects such as a break and a chip even though the resin composition was highly filled with the inorganic substance powder. These effects were particularly significant in the resin compositions including the styrene-butadiene block copolymer and the second high impact polystyrene or the styrene resin.

## Claims

1. An inorganic substance powder-filled resin composition comprising
a thermoplastic resin and inorganic substance powder in a proportion of 50:50 to 10:90 in a mass ratio, wherein
the thermoplastic resin contains a first high impact polystyrene resin having a melt mass flow rate (200°C, 49.03 N) measured in accordance with JIS K6923-1 (ISO1133) of 12 g/10 min or more and 18 g/10 min or less and a Charpy impact strength measured in accordance with JIS K7111 of 8 KJ/m² or more and 12 KJ/m² or less in an amount of 90% by mass or more relative to 100% by mass of a total mass of the thermoplastic resin.

2. The inorganic substance powder-filled resin composition according to claim 1, wherein the first high impact polystyrene resin is contained in an amount of 93% by mass or more relative to 100% by mass of a total mass of the thermoplastic resin.

3. The inorganic substance powder-filled resin composition according to claim 1 or 2, wherein
the thermoplastic resin further comprises a second high impact polystyrene resin having a melt mass flow rate (200°C, 49.03 N) measured in accordance with JIS K6923-1 (ISO1133) of 5 g/10 min or more and 9 g/10 min or less and a Charpy impact strength measured in accordance with JIS K7111 of 11 KJ/m² or more and 15 KJ/m² or less, and
a content of the first high impact polystyrene resin is 93% by mass or more and 97% by mass or less and a content of the second high impact polystyrene resin is 3% by mass or more and 7% by mass or less relative to 100% by mass of a total mass of the thermoplastic resin.

4. The inorganic substance powder-filled resin composition according to claim 1 or 2, wherein
the thermoplastic resin further comprises a polystyrene resin having a melt mass flow rate (200°C, 49.03 N) measured in accordance with JIS K6923-1 (ISO1133) of 6 g/10 min or more and 10 g/10 min or less and a Charpy impact strength measured in accordance with JIS K7111 of 1 KJ/m² or more and 4 KJ/m² or less, and
a content of the first high impact polystyrene resin is 93% by mass or more and 97% by mass or less and a content of the polystyrene resin is 3% by mass or more and 7% by mass or less relative to 100% by mass of a total mass of the thermoplastic resin.

5. The inorganic substance powder-filled resin composition according to any one of claims 1 to 4, wherein the inorganic substance powder is heavy calcium carbonate.

6. The inorganic substance powder-filled resin composition according to claim 5, wherein the heavy calcium carbonate is heavy calcium carbonate particles having an average particle diameter measured by an air permeation method in accordance with JIS M-8511 of 0.7 um or more and 6.0 µm or less.

7. The inorganic substance powder-filled resin composition according to any one of claims 1 to 6, further comprising a styrene-butadiene block copolymer having a melt mass flow rate (200°C, 49.03 N) measured in accordance with JIS K6923-1 (ISO1133) of 15 g/10 min or more and 25 g/10 min or less, wherein
a content of the styrene-butadiene block copolymer is 10% by mass or more and 15% by mass or less relative to 100% by mass of a total mass of the thermoplastic resin.

8. A molded product comprising the inorganic substance powder-filled resin composition according to any one of claims 1 to 7.

9. The molded product according to claim 8, wherein the molded product is an injection-molded product.
